# EUROPÄISCHE PATENTSCHRIFT

(11) **EP 4 258 947 B1**
(45) Veröffentlichungstag und Bekanntmachung des Hinweises auf die Patenterteilung: **14.10.2026**
(21) Anmeldenummer: 21839830.3
(22) Anmeldetag: 13.12.2021
(51) Int. Cl.: A47F 5/10, A47B 47/02, B65G 1/02, A47F 7/00

(54) **KRAGARMREGAL**
CANTILEVER RACK
BÂTI EN PORTE-À-FAUX

(30) Priorität: 11.12.2020 DE 202020005145 U
(43) Veröffentlichungstag der Anmeldung: 18.10.2023
(73) Patentinhaber: Hölscher Holding GmbH, 50169 Kerpen (DE)
(72) Erfinder: HÖLSCHER, Andreas, 50933 Köln (DE); BEIL, Michael, 78176 Blumberg (DE)
(74) Vertreter: KBN IP Patentanwälte Partnerschaft mbB
(86) Internationale Anmeldenummer: PCT/EP2021/085562
(87) Internationale Veröffentlichungsnummer: WO 2022/123086

(56) Entgegenhaltungen:
- DE-T2- 602005 002 317
- DE-U- 7 429 023
- US-A- 3 512 654

## Beschreibung

Die Erfindung ist auf ein Kragarmregal mit Ständern und sich von diesen aus erstreckenden Kragarmen gerichtet, wobei jeder Ständer zumindest zwei in Ständerlängsrichtung angeordnete, parallele Lochreihen zum höhenverstellbaren Befestigen der Kragarme aufweist, in die die Befestigungsenden der Kragarme eingreifen.

Derartige Regale werden insbesondere in Lagerhallen zum Lagern beliebiger Güter verwendet, die man entweder, wenn es sich um Güter wie Stangen etc. handelt, unmittelbar auf die von den Ständern frei abstehenden Kragarmen auflegt oder auf einen durchgehenden Boden aus Brettern oder dergleichen absetzt. Generell können zwei Grundsysteme unterschieden werden, das Kragarmregal aus warmgewalzten Baustahlprofilen und das Kragarmregal aus dünnwandigen Blechprofilen. Die Blechprofile sind bezüglich des Materialeinsatzes deutlich vorteilhaft, weisen aber auch bedeutende Schwächen auf. Eine Lösung, die sich aber am Markt nicht durchsetzen konnte, ist der aus DE 35 15 260 A1 bekannte Kragarmständer aus Vierkantrohr, dessen Herstellung aufwendig und teuer ist.

Das älteste Kragarmregalsystem in Europa ist das konische. Das konische System wird aus Blechtafeln hergestellt. Zunächst werden zwei Halbschalen hergestellt, die zuerst aus Blechtafeln zugeschnitten, dann gestanzt und gekantet werden. Dann werden die beiden Halbschalen miteinander verschweißt und lackiert. Aufgrund hoher Fertigungskosten wurde das konische Blechregal weiterentwickelt und besteht heute oftmals aus parallel verlaufenden U- oder C-Halbschalenprofilen, die gekantet oder profiliert und dann miteinander verschweißt und lackiert werden. Schweißen und Lackieren sind aufwendige Fertigungsprozesse, die entsprechend hohe Kosten verursachen. Beispielsweise beschriebt das Dokument DE 74 29 023 U eine solche Regalsystemkonstruktion. In einer weiteren Entwicklung werden daher sendzimierverzinkte Halbschalenprofile miteinander verschraubt, womit auf Schweißen und Lackieren verzichtet werden kann. Die Verschraubungen darf aber zu keinen Erhebungen (hervorstehende Schraubenkopf, -mutter) im Bereich der einzuführenden Kragarme führen, da sonst der Kragarm in der Höhe des Ständers nicht verstellt und fixiert werden kann. Das führt bei bekannten Systemen zu aufwendigen, schwer und damit teuer herzustellenden Halbschalenprofilformen deren Montage hohe Sachkenntnis voraussetzt. Das Dokument DE 60 2005 002317 T2 beschreibt Regalständer für Regalsysteme, die aus U- bzw. C-förmigen Profilen bestehen, die durch eine Steckkonstruktion miteinander verbunden sind. Das Dokument DE 74 29 023 U offenbart ein Kragarmregal nach dem Oberbegriff des Anspruchs 1.

Bei diesen, ganz aus Blechen bestehenden Regalen ist es zudem besonders nachteilig, dass bei rauhem Gabelstaplerbetrieb der für die Stabilität und statisch sehr wichtige Regalfuß sehr leicht beschädigt und seine Stabilitätsfunktion für das Gesamtregal verlieren kann. Bei vielen Kragarmsystemen spielt die Verbindung von Kragarm und Kragarmständer eine wichtige Rolle (EP 0 061 514, DE 35 15 260 A1, DE 38 32 537 C2). Am Markt hat sich ein beweglicher Arm etabliert, der bei Anstößen durch einen Gabelstapler nach oben ausweicht. Der Arm selbst und die Kundenware bleiben unbeschädigt. Bekannt ist die Fixierung des Armes am Ständer mittels eines Rundbolzens, der mittels Splint oder ähnlichem gegen Rausfallen gesichert wird, was wiederum einer mechanischen Bearbeitung bedarf, die gerade bei größerer Anzahl an Armen kostenmäßig ins Gewicht fallen kann.

Ausgehend von den vorstehend genannten Kragarmregalen, die der Lagerung von vorwiegend Langgutprodukten dienen und die entsprechend stabil ausgestaltet und in der Lage sind, auch große Lasten zu tragen, liegt der Erfindung die Aufgabe zugrunde, ein Kragarmregal der eingangs genannten Art so zu verbessern und mit einfachen Mitteln so auszugestalten, dass die Regalständer aus einfach zu profilierenden Halbschalen bestehen, die vom Endkunden passgenau und ohne großen Aufwand leicht selbst zu montieren sind, und deren Regalfüße auch im rauhen Staplerverkehr unbeschadet bleiben.

Und schließlich ist die Montage des ersten Regalständers eine besondere Herausforderung, da er eben nicht von alleine stehen bleibt, sondern in der Praxis mit einem zweiten Gabelstapler oder Montagebühne als Hilfsmittel festgehalten wird. Sehr viele kleine Betriebe haben in der Regel nur einen Gabelstapler und müssen zur Montage kostspielig einen weiteren Gabelstapler oder Hubbühne inkl. Transport anmieten.

Die Lösung der Aufgabe erfolgt erfindungsgemäß durch ein Kragarmregal mit den Merkmalen des Anspruchs 1. Bevorzugte Ausgestaltungen der Erfindung sind in den Unteransprüchen und der nachfolgenden Beschreibung angegeben.

Erfindungsgemäß besteht ein Ständer des Kragarmregals im Ständerprofil aus zwei C-Profilen aus Blech, die mit einer innenliegenden Verschraubung miteinander verbunden sind. Durch die Fertigung des Ständers aus C-förmigen Ständerprofilen und die anschließende Verschraubung ist eine kostengünstige Fertigung und eine vereinfachte Montage möglich.

Die C-Profile weisen jeweils zwei nach innen gerichtete Schenkel auf, wobei beim Verbinden der C-Profile die Schenkel des ersten C-Profils und die Schenkel des zweiten C-Profils aufeinander aufliegen und die C-Profile über die Schenkel miteinander verschraubt sind. Die miteinander verschraubten C-Profile bilden ein Hohlprofil als Ständer aus. Die innenliegende Verschraubung ist bevorzugt durch innenliegende Schrauben und Muttern gebildet.

Der Ständer bzw. die Ständerprofile sind derart ausgestaltet, dass die innenliegende Verschraubung von außen also von der Außenfläche des Ständers bzw. der Ständerprofile, leicht zugänglich ist, wobei die "Vorder- und Seitenfläche" des Ständers als Außenfläche der Kragarme erhebungsfrei erhalten bleibt. Für die leichte Zugänglichkeit der innenliegenden Verschraubungen sind auf der Außenseite der Ständerprofile im Bereich der innenliegenden Verschraubung Aussparungen, insbesondere runde Stanzlöcher vorgesehen, durch die die Verschraubungselemente und das Verschraubungswerkzeug einführbar sind und die Profile miteinander verschraubt werden.

Besonders bevorzugt haben die Bleche des Ständerprofils keine Ausrichtung "oben" oder "unten" und können beliebig miteinander verbunden werden. Das erste Ende eines Profils entspricht von Querschnitt und Lochbild dem zweiten Ende des Profils. Die Profile sind also symmetrisch ausgebildet. Dies gilt sowohl für den Querschnitt der Profile, als auch für die Anordnung der parallelen Lochreihen entlang der Ständerlängsrichtung in Bezug auf eine Symmetrieachse quer zur Ständerlängsrichtung. Eine solche Ausgestaltung der Profile ist in Bezug auf die Lagerung und Montage vorteilhaft.

Zur Stabilisierung des Kragarmregals kann am Ständer ein Ständerfuß vorgesehen sein. Der Ständerfuß weist bevorzugt einen Fußsockel auf, an dem sich zwei C- oder U-förmige Stecksockel befinden, mit denen die Ständerprofile durch dasselbe Lochbild der Kragarmfixierung verbindbar sind. Zur Montage von Ständerfuß und Ständer wird der Ständer auf die Stecksockel aufgeschoben. An den äußeren Schenkeln der C- oder U-förmigen Stecksockel sind Lochreihen vorgesehen, deren Anordnung bei bestimmungsgemäßer Montage des Ständers auf den Stecksockeln mit dem Lochbild der Ständerprofile korrespondiert.

Zur Erhöhung der Stabilität des Kragarmregals sind die U-förmigen Stecksockel mit den offenen Seiten des U-förmigen Querschnitts voneinander wegweisen angeordnet.

Bevorzugt weisen die Ständerprofile Doppellöchern zur Befestigung der Kragarme und der Stecksockel auf. Durch die Doppellöcher können beidseitig vom Ständer Kragarme angeordnet werden. Die Stecksockel sind mit den Ständerprofilen durch dieselben Doppellöcher der Kragarmfixierungen verbunden.

In einer vorteilhaften Ausführungsform der Erfindung besteht der Fußsockel aus einem warmgewalzten Doppel-T-Träger oder einem dickwandigen Quadratrohrprofil. Dass keine Füße aus Blechprofilen verwendet werden hat Vorteile im Gebrauch, da Gabelstapler diese Doppel-T-Profile oder dickwandige Rechteck- oder Quadratrohre nicht so leicht beschädigen werden.

Auch die Kragarme sind in einfacher Weise von vorn auf die Bleche des Ständers einzuschieben und auf gleichem Wege auch wieder zu entfernen. Die Befestigungsenden der Kragarme sind bevorzugt mittels Steckbolzen mit Sicherungsring am Ständer fixiert. Zur Arretierung werden die Steckbolzen durch den Ständer durchgeschoben und beidseitig an den Löchern im Befestigungsende der Kragarme mittels Sicherungsringen fixiert.

Montagefreundlich für wenig geübte Endkunden und kostengünstig ist zudem ein Stützfuß, der ein Umfallen des ersten, alleine stehenden Ständers bei der Montage verhindert. Der Stützfuß ist temporär zur Montage mit dem Ständer verbunden und kann am Boden verankert werden.

Weitere Vorteile, Merkmale und Einzelheiten der Erfindung sind den nachfolgenden Erläuterungen zu einem in schematischen Zeichnungsfiguren dargestellten Ausführungsbeispiel zu entnehmen.

Es zeigen:
Fig. 1 einen Ständer mit Kragarmen in perspektivischer Darstellung,
Fig. 2 Seitenansicht eines Fußsockels,
Fig. 3 einen Ständer in perspektivischer Darstellung mit Kragarmen zu beiden Seiten,
Fig. 4 eine perspektivische Detailansicht auf den Fußsockel mit Ständer-/Fußverschraubung
Fig. 5 den Querschnitt des Ständers mit innenliegender Schalenverschraubung,
Fig. 6 eine perspektivische Darstellung zweier Kragarme mit Steckbolzen,
Fig. 7 eine perspektivische Darstellung eines Steckbolzens mit Sicherungsringen.

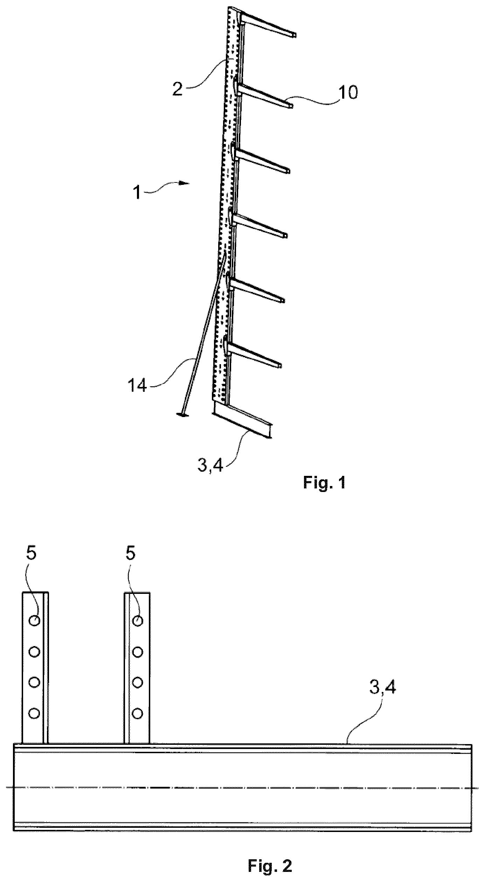

Die Figur 1 zeigt einen erfindungsgemäßen Ständer 1 mit Ständerfuß 3 eines Kragarmregals in einer ersten Ausführungsform. Der Ständer 1 besteht aus zwei aus Blech gefertigten C-förmigen Ständerprofilen 2, die durch eine innenliegenden Verschraubung miteinander verbunden sind und ein Hohlprofil bilden. Am perspektivisch dargestellter Ständer 1 sind Kragarme (10) angeordnet, die an den Ständerprofilen 2 befestigt sind. Der Ständerfuß (3) ist aus einem Fußsockel (4) gebildet. Für die Aufstellung des ersten Ständers (1) kann ein Stützfuß (14) vorgesehen werden.

Die Figur 2 zeigt in einer Seitenansicht einen Ständerfuß 3, der aus einem Fußsockel 4 als Doppel-T-Träger besteht und auf dem zwei Stecksockel 5 aus U-Profilen angebracht sind. An den U-förmigen Stecksockeln sind jeweils beidseitig Lochreihen angeordnet. Die Stecksockel 5 sind mit ihren offenen Seiten des U-förmigen Querschnitts voneinander wegweisend angeordnet und von der Breite derart beabstandet, dass der Ständer 1 auf die Stecksockel 5 aufsetzbar ist und die Lochreihen der Stecksockel 5 mit den Lochreihen des Ständers korrespondieren.

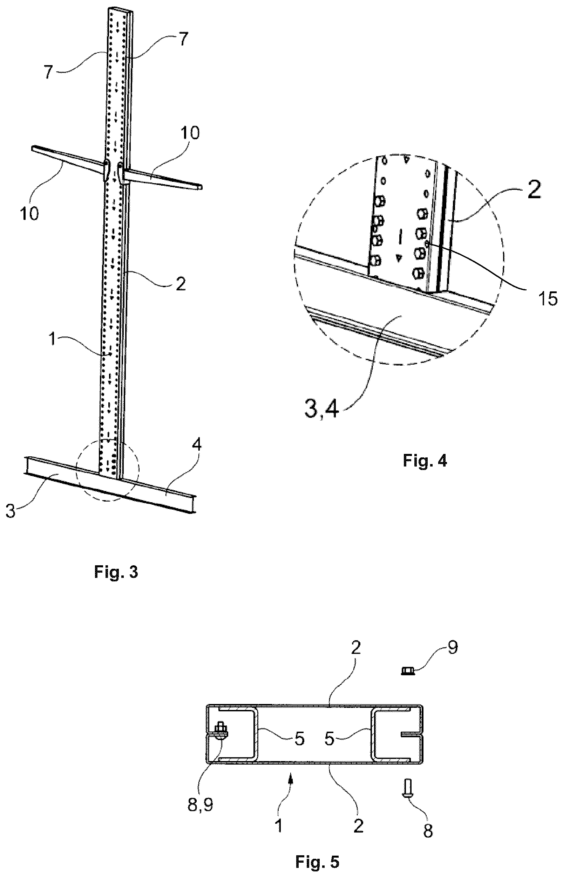

Die Figur 3 zeigt einen Ständer in perspektivischer Darstellung mit Kragarmen 10 zu beiden Seiten des Ständers 1, dessen Ständerprofile 2 zwei längsparallele Lochreihen 7 aufweisen, die zur Fixierung der Steckbolzen der Kragarme 10 und der Stecksockel 5 der Ständerfüße 3 dienen. Die Ständerprofile 2 sind fest verbunden im Fußbereich 3, 4.

Wie aus Figur 4 ersichtlich, sind die Ständerprofile 2 in der dargestellten Detailansicht fest mit dem Fußbereich 3, 4 verbunden, wobei die Einzelheiten aus der Figur 5 besonders deutlich werden. Die zwei Stecksockelprofile 5 befinden sich zwischen den Ständerprofilen 2 und sind mit diesen verschraubt.

Ferner ist in Figur 5 noch die innenliegende Verschraubung der C-förmigen Ständerprofile 2 gezeigt. Die jeweils nach innen gerichteten Schenkel der Ständerprofile 2 liegen aneinander an. Die durch die Schraube 8 und Mutter 9 angedeutete innenliegende Verschraubung erfolgt durch die Schenkel der Ständerprofile 2. Die leichte Zugänglichkeit der innenliegenden Verschraubung von der Außenseite des Ständers 1 bzw. der Ständerprofile 2 ist durch die außerhalb des Ständers 1 gezeigte Schraube 8 und Mutter 9 gezeigt. An der Außenseite der Ständerprofile ist eine Aussparung vorgesehen, durch die die Schrauben 8 und Muttern 9 sowie das Verschraubungswerkzeug eingeführt werden kann.

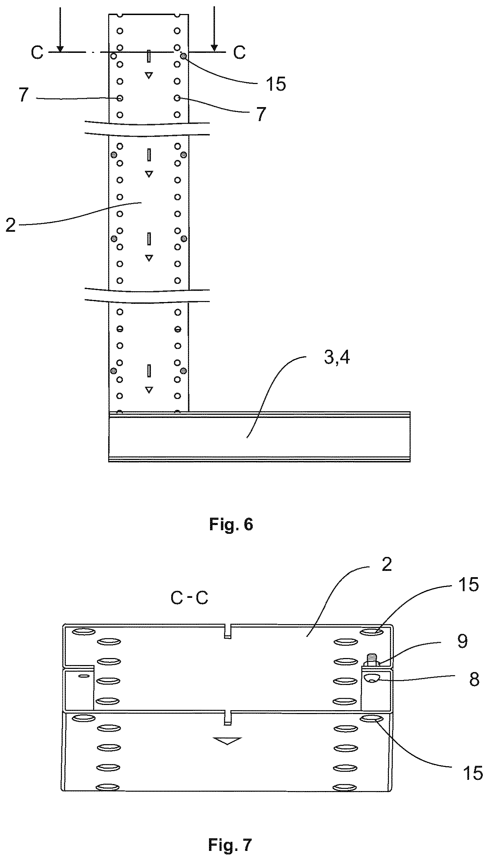

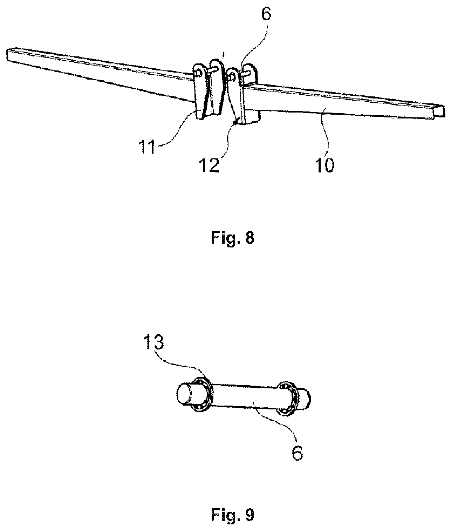

In der Fig. 6 ist eine perspektivische Darstellung zweier Kragarme 10 gezeigt mit Anordnung der Steckbolzen 6 und wobei am Befestigungsende 11 Öffnungen 12 für Unterlegbleche zur Höhennivellierung der Kragarme 10 angeordnet sind.

In der Fig. 7 ist ein Steckbolzen 6 mit Sicherungsring 13 dargestellt.

### Bezugszeichenliste

- 1: Ständer
- 2: Ständerprofilbleche
- 3: Ständerfuß
- 4: Fußsockel
- 5: Stecksockel - C-Profil
- 6: Steckbolzen
- 7: Doppelloch
- 8: Schraube mit
- 9: Mutter
- 10: Kragarm
- 11: Befestigungsende
- 12: Öffnung für Unterlegbleche zur Höhenverstellung
- 13: Sicherungsring
- 14: Stützfuß

## Patentansprüche

1. Kragarmregal mit zumindest zwei Ständern (1) und sich von diesen aus erstreckenden Kragarmen (10), wobei jeder Ständer (1) zwei in Ständerlängsrichtung angeordnete, parallele Lochreihen zum höhenverstellbaren Befestigen der Kragarme (10) aufweist,
wobei ein Ständer (1) im Ständerprofil (2) aus zwei C-Profilen aus Blech besteht, die mit einer innenliegenden Verschraubung miteinander verbunden werden,
wobei die innenliegende Verschraubung von außen zugänglich ist, **dadurch gekennzeichnet, dass** der Ständer (1) ein Hohlprofil ausbildet, wobei die C-Profile jeweils zwei nach innen gerichtete Schenkel aufweisen und die Schenkel des ersten C-Profils und die Schenkel des zweiten C-Profils aufeinander aufliegen und die C-Profile über die Schenkel mit der innenliegenden Verschraubung miteinander verschraubt sind.

2. Kragarmregal nach Anspruch 1, **dadurch gekennzeichnet, dass** der Ständerfuß (3) einen Fußsockel (4) aufweist, an dem sich zwei U-förmige Stecksockel (5) befinden, mit denen die Ständerprofile (2) durch dieselben Löcher der parallelen Lochreihen zum Befestigen der Kragarme (7) verbunden sind.

3. Kragarmregal nach Anspruch 2, **dadurch gekennzeichnet, dass** der Fußsockel (4) aus einem warmgewalzten Doppel-T-Träger oder einem dickwandigen Quadratrohrprofil besteht.

4. Kragarmregal nach einem oder mehreren der Ansprüche 1 bis 3, **dadurch gekennzeichnet, dass** die Bleche des Ständerprofils (2) keine Ausrichtung "oben" oder "unten" haben und beliebig miteinander verbunden werden können.

5. Kragarmregal nach einem oder mehreren der Ansprüche 1 bis 4, **dadurch gekennzeichnet, dass** das Befestigungsende (11) der Kragarme (10) mittels Steckbolzen (6) mit Sicherungsringen (139) am Ständer fixiert ist.

6. Kragarmregal nach einem oder mehreren der Ansprüche 2 bis 5, **dadurch gekennzeichnet, dass** die Ständerprofilbleche (2) mit Doppellöchern (7) versehen sind zur Befestigung der Kragarme (10) und der Stecksockel (5).

7. Kragarmregal nach einem oder mehreren der Ansprüche 1 bis 6, **dadurch gekennzeichnet, dass** ein Stützfuß (14) temporär zur Montage mit dem Ständer (1) verbunden und am Boden verankert werden kann.

8. Ständer (1) für ein Kragarmregal nach Anspruch 1, wobei der Ständer (1) im Ständerprofil (2) aus zwei C-Profilen aus Blech besteht und ein Hohlprofil ausbildet, wobei die C-Profile jeweils zwei nach innen gerichtete Schenkel aufweisen und die Schenkel des ersten C-Profils und die Schenkel des zweiten C-Profils aufeinander aufliegen und die C-Profile über die Schenkel mit einer innenliegenden Verschraubung miteinander verschraubt sind, wobei die innenliegende Verschraubung von außen zugänglich ist.

## Claims

1. Cantilever rack with at least two uprights (1) and cantilever arms (10) extending therefrom, wherein each upright (1) comprises two parallel rows of holes arranged in the longitudinal direction of the upright for height-adjustable fastening of the cantilever arms (10), wherein an upright (1) consists, in its upright profile (2), of two C-profiles made of sheet metal that are connected to one another by an internal screw connection, wherein the internal screw connection is accessible from the outside, **characterized in that** the upright (1) forms a hollow profile, wherein the C-profiles each have two inward-facing legs, and the legs of the first C-profile and the legs of the second C-profile rest on one another, and the C-profiles are screwed together via the legs with an internal screw connection.

2. Cantilever rack according to claim 1, **characterized in that** the upright foot (3) comprises a foot base (4) on which two U-shaped plug bases (5) are located, by means of which the upright profiles (2) are connected through the same holes in the parallel rows of holes for fastening the cantilever arms (7).

3. Cantilever rack according to claim 2, **characterized in that** the foot base (4) consists of a hot-rolled double-T-beam or a thick-walled square tube profile.

4. Cantilever rack according to one or more of claims 1 to 3, **characterized in that** the sheets of the upright profile (2) have no "top" or "bottom" orientation and can be connected to one another in any manner.

5. Cantilever rack according to one or more of claims 1 to 4, **characterized in that** the fastening end (11) of the cantilever arms (10) is fixed to the upright by means of socket pins (6) with retaining rings (139).

6. Cantilever rack according to one or more of claims 2 to 5, **characterized in that** the upright profile sheets (2) are provided with double holes (7) for fastening the cantilever arms (10) and the plug bases (5).

7. Cantilever rack according to one or more of claims 1 to 6, **characterized in that** a support foot (14) can be temporarily connected to the upright (1) for assembly and anchored to the floor.

8. Upright (1) for a cantilever rack according to claim 1, wherein the upright (1) consists, in its upright profile (2), of two C-profiles made of sheet metal and forms a hollow profile, wherein the C-profiles each have two inward-facing legs, and the legs of the first C-profile and the legs of the second C-profile rest on one another, and the C-profiles are screwed together via the legs with an internal screw connection, wherein the internal screw connection is accessible from the outside.

## Revendications

1. Rayonnage à bras en porte-à-faux comprenant au moins deux montants (1) et des bras en porte-à-faux (10) s'étendant à partir de ceux-ci, chaque montant (1) comportant deux rangées de trous parallèles, disposées dans le sens longitudinal du montant, pour la fixation réglable en hauteur des bras en porte-à-faux (10), un montant (1) étant constitué, dans le profilé de montant (2), de deux profilés en C en tôle, qui sont reliés entre eux par un assemblage vissé interne, cet assemblage vissé interne étant accessible de l'extérieur, **caractérisé en ce que** le montant (1) forme un profilé creux, les profilés en C comportant chacun deux ailes dirigées vers l'intérieur, les ailes du premier profilé en C et celles du deuxième profilé en C reposant les unes sur les autres, et les profilés en C étant vissés entre eux par l'intermédiaire de leurs ailes au moyen d'un assemblage vissé interne.

2. Rayonnage à bras en porte-à-faux selon la revendication 1, **caractérisé en ce que** le pied de montant (3) comporte un socle (4) sur lequel se trouvent deux socles enfichables en forme de U (5), au moyen desquels les profilés de montant (2) sont reliés par les mêmes trous des rangées de trous parallèles pour la fixation des bras en porte-à-faux (7).

3. Rayonnage à bras en porte-à-faux selon la revendication 2, **caractérisé en ce que** le socle (4) est constitué d'une poutre en double T laminée à chaud ou d'un profilé tubulaire carré à paroi épaisse.

4. Rayonnage à bras en porte-à-faux selon l'une ou plusieurs des revendications 1 à 3, **caractérisé en ce que** les tôles du profilé de montant (2) n'ont pas d'orientation « haut » ou « bas » et peuvent être assemblées entre elles de manière quelconque.

5. Rayonnage à bras en porte-à-faux selon l'une ou plusieurs des revendications 1 à 4, **caractérisé en ce que** l'extrémité de fixation (11) des bras en porte-à-faux (10) est fixée au montant au moyen de broches (6) munies de circlips (139).

6. Rayonnage à bras en porte-à-faux selon l'une ou plusieurs des revendications 2 à 5, **caractérisé en ce que** les tôles du profilé de montant (2) sont pourvues de doubles trous (7) pour la fixation des bras en porte-à-faux (10) et des socles enfichables (5).

7. Rayonnage à bras en porte-à-faux selon l'une ou plusieurs des revendications 1 à 6, **caractérisé en ce qu'**un pied d'appui (14) peut être relié temporairement au montant (1) pour le montage et ancré au sol.

8. Montant (1) pour un rayonnage à bras en porte-à-faux selon la revendication 1, le montant (1) étant constitué, dans le profilé de montant (2), de deux profilés en C en tôle et formant un profilé creux, les profilés en C comportant chacun deux ailes dirigées vers l'intérieur, les ailes du premier profilé en C et celles du deuxième profilé en C reposant les unes sur les autres, et les profilés en C étant vissés entre eux par l'intermédiaire de leurs ailes au moyen d'un assemblage vissé interne, cet assemblage vissé interne étant accessible de l'extérieur.
